# EUROPEAN PATENT APPLICATION

(11) **EP 4 432 457 A1**
(43) Date of publication of application: **18.09.2024**
(21) Application number: 24163992.1
(22) Date of filing: 15.03.2024
(51) Int. Cl.: H01M 50/574, H01M 50/204, H01M 50/503, H01M 50/519, H01M 50/578

(54) **BATTERY MODULE, BATTERY PACK, AND ELECTRICAL DEVICE**

(30) Priority: 16.03.2023 CN 202310253655
(71) Applicant: Xiamen Ampack Technology Limited, Xiamen City, Fujian Province 361000 (CN)
(72) Inventor: HUANG, Silin, Xiamen City, Fujian Province, People s Republic of China, 361000 (CN); XIAO, Zhiwen, Xiamen City, Fujian Province, People s Republic of China, 361000 (CN); YAN, Liwei, Xiamen City, Fujian Province, People s Republic of China, 361000 (CN); WANG, Shenbo, Xiamen City, Fujian Province, People s Republic of China, 361000 (CN)
(74) Representative: Icosa

(57) **Abstract**

A battery module includes a battery cell assembly (1) and a first circuit board (2). A plurality of battery cells (11) in the battery cell assembly (1) are arranged in a first direction. The first circuit board (2) and the battery cell assembly (1) are arranged in the first direction. A first conductive member (21) of the first circuit board (2) is disposed on a path of a main circuit of the battery module, and the first conductive member (21) is configured to be disconnected in response to squeezing of the battery cell assembly (1). With the above-described structure, when excessive expansion of the battery cells is caused by overcharging or other abnormalities of the battery module, the first conductive member (21) is squeezed by expansion of the battery cell assembly (1) in the first direction to disconnect the first conductive member (21) and cut off the main circuit.

## Description

### TECHNICAL FIELD

This application relates to the technical field of batteries, in particular to a battery module, a battery pack, and an electrical device.

### BACKGROUND

A rechargeable battery refers to a battery that can be continuously used by activating an active material in a charging manner after discharging. The rechargeable battery is widely used in electronic devices, such as cell phones, laptops, power tools, and two-wheeled vehicles.

In the development of battery technology, the safety of battery packs has always received widespread attention. Overcharging of batteries is one of the main reasons for inducing thermal runaway of batteries, and preventing overcharging of batteries has become an important research direction in the industry.

### SUMMARY

In view of the above-described problems, this application provides a battery pack, which is beneficial to improving the safety of the battery pack.

In order to achieve the above-described objective, this application adopts the following technical solutions.

According to a first aspect, this application provides a battery module, including a battery cell assembly and a first circuit board. The battery cell assembly includes a plurality of battery cells, and the plurality of battery cells are arranged in a first direction. The battery cell assembly and the first circuit board are arranged in the first direction. The first circuit board includes a first conductive member. The first conductive member is disposed on a path of a main circuit of the battery module, and the first conductive member is configured to be disconnected in response to squeezing of the battery cell assembly to turn off the main circuit.

According to the battery module provided by some embodiments of this application, the first circuit board includes a substrate, and the first conductive member is printed on the substrate.

According to the battery module provided by some embodiments of this application, the substrate includes a first member, a second member, and a third member. The first member is connected to the second member by the third member. The first conductive member covers at least a part of the third member, and the third member is configured to be disconnected in response to squeezing of the battery cell assembly.

According to the battery module provided by some embodiments of this application, the third member includes a first concave portion, and the first concave portion faces the battery cell assembly in the first direction. In the first direction, a thickness of the first concave portion is less than a thickness of the first member, and the thickness of the first concave portion is less than a thickness of the second member.

According to the battery module provided by some embodiments of this application, the substrate is provided with at least one first hole, and the first hole penetrates through the third member in the first direction.

According to the battery module provided by some embodiments of this application, the battery module further includes a fourth member, and the fourth member is located between the battery cell assembly and the first conductive member. The fourth member is configured to disconnect the first conductive member when being squeezed by the battery cell assembly.

According to the battery module provided by some embodiments of this application, the fourth member includes a main body portion and a protruding portion. In the first direction, the protruding portion protrudes from the main body portion and extends toward the first conductive member. A projection of the protruding portion overlaps a projection of the first conductive member in the first direction.

According to the battery module provided by some embodiments of this application, the first conductive member may cover an entire surface of the substrate, which is beneficial to further improving the overcurrent capability of the first conductive member.

According to the battery module provided by some embodiments of this application, the first conductive member includes a copper foil. The copper foil is printed on the substrate, and the substrate and the copper foil are connected by, for example, a fusion agent such as an epoxy resin.

According to the battery module provided by some embodiments of this application, the first conductive member may be formed by welding a connection wire and a conductive sheet on a printed circuit board. The first conductive member has a good overcurrent capability, which is beneficial to improving the safety of the battery module. For example, the conductive sheet may be a copper bar.

According to the battery module provided by some embodiments of this application, a partial region of the first conductive member may be made of a material with relatively low strength, so that the partial region has relatively weak structural strength, and accordingly the partial region is broken when the first conductive member is squeezed.

According to a second aspect, this application further provides a battery pack, including the battery module provided by any one of the above-described technical solutions. The battery pack further includes a housing, and at least a part of the battery module is located in the housing.

According to the battery pack provided by some embodiments of this application, the first circuit board is fixed to the housing.

According to the battery pack provided by some embodiments of this application, the battery pack further includes a connector. The connector is configured to be connected to an electrical device. The first conductive member includes a first part, a second part, and a third part. The first part and the second part are connected by the third part, and the first part is connected between the connector and the third part. The second part is connected between the battery cell assembly and the third part, and the third part is configured to be disconnected when being squeezed by the battery cell assembly.

According to the battery pack provided by some embodiments of this application, the battery pack further includes a first electrical connection member. The first electrical connection member includes a first segment and a second segment separated from each other. The first segment connects the battery cell assembly to the second part, and the second segment connects the connector to the first part.

According to the battery pack provided by some embodiments of this application, the battery pack further includes a second circuit board and an insulating bracket. The second circuit board and the insulating bracket are disposed in the housing. In the first direction, the second circuit board and the connector are disposed on a side of the insulating bracket facing away from the battery cell assembly, and the first circuit board is disposed on a side of the insulating bracket facing towards the battery cell assembly.

According to the battery pack provided by some embodiments of this application, the insulating bracket is provided with an opening, and the second segment is connected to the connector after penetrating through the opening.

According to the battery pack provided by some embodiments of this application, the second circuit board is electrically connected to a plurality of battery cells in the battery cell assembly. A battery management system (BMS) assembly may be disposed on the second circuit board, and the BMS assembly includes a plurality of electronic components. The plurality of electronic components can achieve functions such as data collection, control, protection, communication, electric quantity calculation, signal transmission, and electrical energy transmission for the battery cells in a battery cell assembly, and can intelligently manage and maintain the plurality of battery cells, which is beneficial to improving the performance and prolonging the service life of the battery pack.

According to the battery pack provided by some embodiments of this application, the first circuit board is located between the insulating bracket and the battery cell assembly, and the battery pack includes a fastener. The fastener fixedly connects the insulating bracket, the first circuit board, and the housing to further limit movement of the first circuit board with expansion of the battery cell assembly. According to a third aspect, this application further provides an electrical device. The electrical device includes a load and the battery pack provided by any one of the above-described technical solutions. The battery pack supplies electric power to the load.

The technical solutions provided by some embodiments of this application at least bring the following beneficial effects.

This application provides the battery module, including the battery cell assembly and the first circuit board, a plurality of battery cells in the battery cell assembly are arranged in the first direction, the first circuit board and the battery cell assembly are arranged in the first direction, a first conductive member of the first circuit board is disposed on the path of the main circuit of the battery module, and the first conductive member is configured to be disconnected in response to squeezing of the battery cell assembly. With the above-described structure, when excessive expansion of the battery cell is caused by overcharging or other abnormalities of the battery module, the first conductive member is squeezed by expansion of the battery cell assembly in the first direction to disconnect the first conductive member and cut off the main circuit, so that protection against overcharging of the battery module is achieved, and the safety of the module is advantageously improved.

This application also provides the battery pack, where the battery module is disposed in the housing. The battery pack includes the housing and the battery module provided by the above-described technical solutions, and therefore, the battery pack has a protection function against overcharging and good safety.

This application further provides the electrical device. The electrical device includes the battery pack provided by the above-described technical solutions, and therefore, the safety of the electrical device is relatively high.

The above description is merely an overview of the technical solutions of this application, and in order to more clearly understand the technical method of this application, implementation may be made according to the content of the specification. In order to make the above-described and other objectives, features, and advantages of this application more apparent and easy to understand, the following specific implementations of this application are specifically described.

### BRIEF DESCRIPTION OF DRAWINGS

Various other advantages and benefits will become apparent to those ordinary skilled in the art upon reading the following detailed description of the preferred implementations. The accompanying drawings are merely used for illustrating preferred implementations and are not considered as a limitation to this application. Furthermore, in the whole accompanying drawings, the same components are denoted by the same reference numerals. In the drawings:
FIG. 1 is a schematic structural diagram of a battery module provided by some embodiments of this application;
FIG. 2 is a schematic structural diagram of a first circuit board provided by some embodiments of this application;
FIG. 3 is a schematic structural diagram of a first circuit board provided by some embodiments of this application;
FIG. 4 is another schematic structural diagram of a first circuit board provided by some embodiments of this application;
FIG. 5 is a schematic diagram of a partial internal structure of a battery pack provided by some embodiments of this application;
FIG. 6 is an enlarged view of a part A in FIG. 3;
FIG. 7 is a perspective view of a first circuit board provided by some embodiments of this application from one view;
FIG. 8 is a schematic diagram of a first circuit board provided by other embodiments of this application from one view;
FIG. 9 is a schematic diagram of a partial structure of a battery pack provided by some embodiments of this application; and
FIG. 10 is a schematic diagram of a split structure of a battery module provided by some embodiments of this application.

1: Battery cell assembly; 11: Battery cell; 2: First circuit board; 21: First conductive member; 210: Conductive sheet; 211: First part; 212: Second part; 213: Third part; 22: Substrate; 221: First member; 222: Second member; 223: Third member; 2231: First concave portion; 2232: First hole; 3: Fourth member; 31: Main body portion; 32: Protruding portion; 4: Housing; 5: Connector; 51: Connection terminal; 52: Base portion; 61: First segment; 62: Second segment; 621: First connection segment; 622: Second connection segment; 7: Second electrical connection member; 8: Second circuit board; 9: Insulating bracket; 91: Opening; 100: Conductive member; and 101: Fastener.

### DETAILED DESCRIPTION OF EMBODIMENTS

Some embodiments of the technical solutions of this application are described in detail below with reference to the accompanying drawings. The following some embodiments are only used to describe the technical solutions of this application more clearly, and therefore are only used as examples, and cannot limit the protection scope of this application.

It should be noted that, unless otherwise specified, the technical terms or scientific terms used in some embodiments of this application should have general meanings understood by those skilled in the art to which some embodiments of this application belong.

In addition, technical terms "first", "second", and the like are merely used for description purposes, and cannot be understood as indicating or implying relative importance or implicitly indicating a quantity of indicated technical features. In the description of some embodiments of this application, "a plurality of" means two or more, unless otherwise clearly and specifically limited.

In the description of some embodiments of this application, unless otherwise clearly specified and limited, technical terms such as "installation", "being connected", "connection", "fix" and the like should be understood in a broad sense. For example, the term "connection" may mean a fixed connection, a detachable connection, or an integration, or may mean a mechanical connection or an electrical connection. The term "being connected" may mean being directly connected or being indirectly connected by an intermediate medium, or may mean internal communication between two elements or an interaction relationship between two elements. For those ordinary skilled in the art, specific meanings of the above-described terms in some embodiments of this application may be understood according to specific situations.

In the description of some embodiments of this application, unless otherwise clearly specified and limited, a first feature being "above" or "below" a second feature may mean that the first and second features are in direct contact, or the first and second features are in indirect contact by an intermediate medium. In addition, the first feature being "on", "above" and "on an upper side of" the second feature may mean that the first feature is directly above or diagonally above the second feature, or may simply mean that the first feature has a larger horizontal height than the second feature. The first feature being "under", "below" and "on a lower side of" the second feature may mean that the first feature is directly below or diagonally below the second feature, or may simply mean that the first feature has a smaller horizontal height than the second feature.

At present, from the development of market situations, batteries are more widely used. The batteries are not only applied to energy storage power supply systems such as hydropower, thermal power, wind power and solar power stations, but also widely applied to various fields such as electric vehicles such as electric bicycles and electric motorcycles, power tools, and communication equipment. With the continuous expansion of battery application fields, the market demand of the batteries is also continuously increased.

Hereinafter, the technical solutions of a battery module, a battery pack, and an electrical device provided by this application will be further described below by specific implementations.

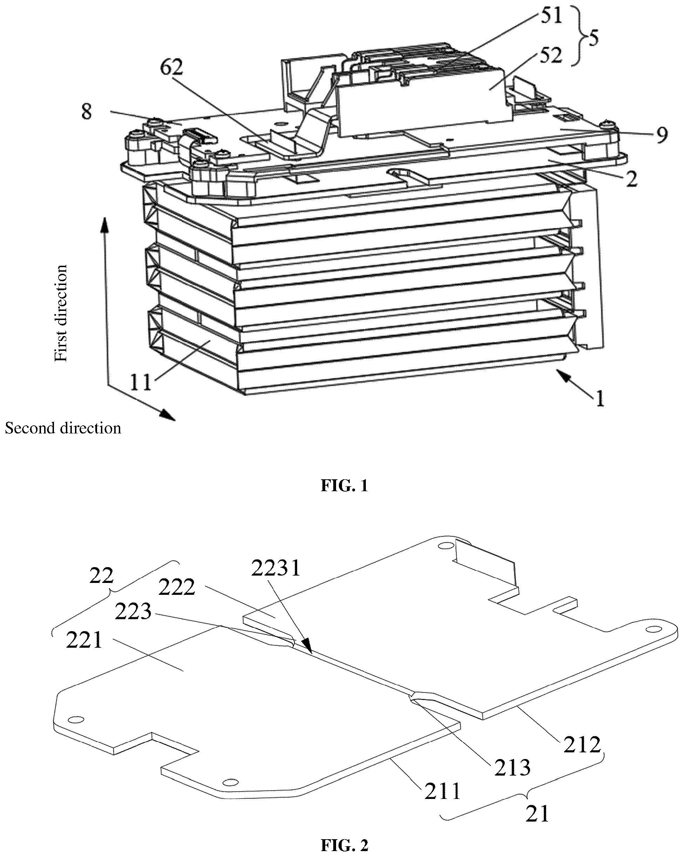

As shown in FIG. 1, some embodiments of this application provide a battery module. The battery module includes a battery cell assembly 1 and a first circuit board 2. The battery cell assembly 1 includes a plurality of battery cells 11, and the plurality of battery cells 11 are arranged in a first direction. The battery cell assembly 1 and the first circuit board 2 are arranged in the first direction. The first circuit board 2 includes a first conductive member 21, and the first conductive member 21 is disposed on a path of a main circuit of the battery module. The first conductive member 21 is configured to be disconnected in response to squeezing of the battery cell assembly 1, to turn off the main circuit and cut off electrical energy input to or output from the battery module.

In the first direction, when the battery cell assembly 1 expands, the first conductive member 21 is squeezed. The expansion of the plurality of battery cells 11 arranged in the first direction will accumulate in the first direction, and an expansion displacement of the battery cell assembly 1 is generated in the first direction, so that the first conductive member 21 is squeezed and disconnected to turn off the main circuit.

The battery cell assembly 1 includes the plurality of battery cells 11, and each battery cell 11 includes a battery cell housing, an electrode terminal disposed on the battery cell housing, and an electrode assembly disposed in the battery cell housing. The electrode terminal is connected to the electrode assembly and extends from the battery cell housing. In some embodiments, the electrode assembly includes a positive electrode plate, a negative electrode plate, and a separator between the positive electrode plate and the negative electrode plate. The battery cell 11 includes, but is not limited to, a lithium-ion cell 11, a sodium-ion cell 11, and the like. The battery cell 11 mainly works by moving metal ions such as lithium ions and sodium ions between the positive electrode plate and the negative electrode plate.

In some embodiments, the battery cell 11 includes a pouch cell.

In some embodiments, the battery cell 11 includes a square shell cell.

In some embodiments, the battery cell housing includes an aluminum-plastic film.

In some embodiments, the plurality of battery cells 11 may be connected in series or in parallel or in series-parallel connection. The series-parallel connection means that the plurality of battery cells 11 are connected in series and in parallel. The plurality of battery cells 11 may be directly connected in series or in parallel or in series-parallel connection, and then the plurality of battery cells 11 are arranged in the first direction to directly form the battery cell assembly 1. Alternatively, the plurality of battery cells 11 may be electrically connected and then arranged in the first direction into modules, and then the plurality of modules are connected in series or in parallel or in series-parallel connection to form the battery cell assembly 1 as a whole.

In some embodiments, the main circuit may be a power loop or a motive power loop. The main circuit of the battery module includes a charging circuit and/or a discharging circuit of the battery module. Optionally, a charging port and a discharging port of the battery module are different ports, and in this case, a path of the charging circuit of the battery module is different from a path of the discharging circuit of the battery module. Optionally, the charging port and the discharging port of the battery module are the same port, and in this case, the path of the charging circuit and the path of the discharging circuit of the battery module are the same path.

The first conductive member 21 being configured to be disconnected when being squeezed by the battery cell assembly 1 may mean that a weak structure is disposed in a partial region of the first conductive member 21, so that when the first conductive member 21 is squeezed by the battery cell assembly 1, the weak structure is broken, causing the first conductive member 21 to break and be divided into at least two parts.

In some embodiments, the partial region of the first conductive member 21 may be machined by cutting, punching, or the like, so that the partial region has relatively weak structural strength, and when the first conductive member 21 is squeezed, the partial region may be broken. Alternatively, the partial region of the first conductive member 21 may be made of a material with relatively low strength, so that the partial region has relatively weak structural strength, and when the first conductive member 21 is squeezed, the partial region is broken.

In some embodiments, as shown in FIG. 2, the first circuit board 2 includes a substrate 22, and the first conductive member 21 is printed on the substrate 22. For example, the substrate 22 may include one of a phenolic paper laminate, an epoxy paper laminate, a polyester glass felt laminate, and an epoxy glass cloth laminate.

The substrate 22 may be an insulating device configured to carry the first conductive member 21. The first conductive member 21 is printed on the substrate 22, so that the first circuit board 2 composed of the first conductive member 21 and the substrate 22 has better integrity. In other embodiments, the first conductive member 21 may also be connected to the substrate 22 by welding and a connection member such as a bolt.

Exemplarily, the first circuit board 2 may be a printed circuit board. The substrate 22 has good insulation performance, and the first conductive member 21 may be a connection wire on the printed circuit board.

In some embodiments, the first conductive member 21 is printed on a surface of the substrate 22, and the first conductive member 21 and the substrate 22 are disposed in an arrangement.

In some embodiments, part of the first conductive member 21 is printed inside the substrate 22, and another part of the first conductive member 21 is printed on the surface of the substrate 22. Part of the first conductive member 21 is covered with the material of the substrate 22, and the substrate 22 may play a role in protecting the first conductive member 21 located inside the substrate 22.

In some embodiments, the first conductive member 21 includes a copper foil, and the copper foil is printed on the substrate 22. For example, the substrate and copper foil are connected by a fusion agent such as an epoxy resin.

In some embodiments, the first conductive member 21 covers a surface of the substrate 22 facing away from the battery cell assembly 1. In some embodiments, the first conductive member 21 may be formed by welding a connection wire and a conductive sheet on a printed circuit board, and the first conductive member 21 has a good overcurrent capability, which is beneficial to improving the safety of the battery module. For example, the conductive sheet may be a copper bar.

In some embodiments, as shown in FIG. 2, the substrate 22 includes a first member 221, a second member 222, and a third member 223. The first member 221 is connected to the second member 222 by the third member 223. The first conductive member 21 covers at least a part of the third member 223, and the third member 223 is configured to be disconnected in response to squeezing of the battery cell assembly 1.

The first member 221, the second member 222, and the third member 223 are integrally formed by connecting the third member 223 between the first member 221 and the second member 222. In some embodiments, the third member 223 may be an integrated structure formed by machining such as stamping or cutting a blank of the substrate 22, or may be an integral structure of the substrate 22 connected by a manner such as welding and adhesion.

In some embodiments, the first conductive member 21 covers at least a part of the third member 223, and the third member 223 is configured to be disconnected in response to the squeezing of the battery cell assembly 1, so that when the third member 223 is disconnected in response to the squeezing of the battery cell assembly 1, the first conductive member 21 covering the third member 223 is also disconnected accordingly, to cause the first conductive member 21 to turn off the main circuit. In the first direction, a projection of the first conductive member 21 overlaps a projection of the third member 223, so that the first conductive member 21 can be driven to be disconnected when the third member 223 is disconnected.

In some embodiments, the first conductive member 21 may cover an entire surface of the substrate 22, which is beneficial to further increasing the overcurrent capability of the first conductive member 21.

In some embodiments, the third member 223 includes a first concave portion 2231, and the first concave portion 2231 is disposed in a manner of facing the battery cell assembly 1. The first concave portion 2231 faces the battery cell assembly 1 in the first direction. In the first direction, a thickness of the first concave portion 2231 is less than a thickness of the first member 221, and the thickness of the first concave portion 2231 is less than a thickness of the second member 222, so that the first concave portion 2231 is a region of the substrate 22 having a minimum thickness in the first direction, and the substrate 22 is disconnected at the first concave portion 2231 when being acted on by the battery cell assembly 1 in the first direction.

The first concave portion 2231 may be formed on the third member 223 in a machining manner such as cutting and punching, and can reduce the structural strength of the partial region, so that the structural strength of the partial region is less than the structural strength of other regions of the substrate 22. Therefore, the third member 223 will be broken when the third member 223 is squeezed.

In some embodiments, the first concave portion 2231 may be a V-shaped groove. The V-shaped groove has a relatively sharp groove bottom structure, so that a part having the first concave portion 2231 can be easily broken under the action of an external force.

In some embodiments, in a second direction, a length of the third member 223 is less than a length of the first member 221, and the length of the third member 223 is less than a length of the second member 222. When the battery cell assembly 1 expands, the battery cell assembly 1 squeezes the third member 223, and the third member 223 is broken under the action of the battery cell assembly 1. The second direction may be a direction perpendicular to the first direction.

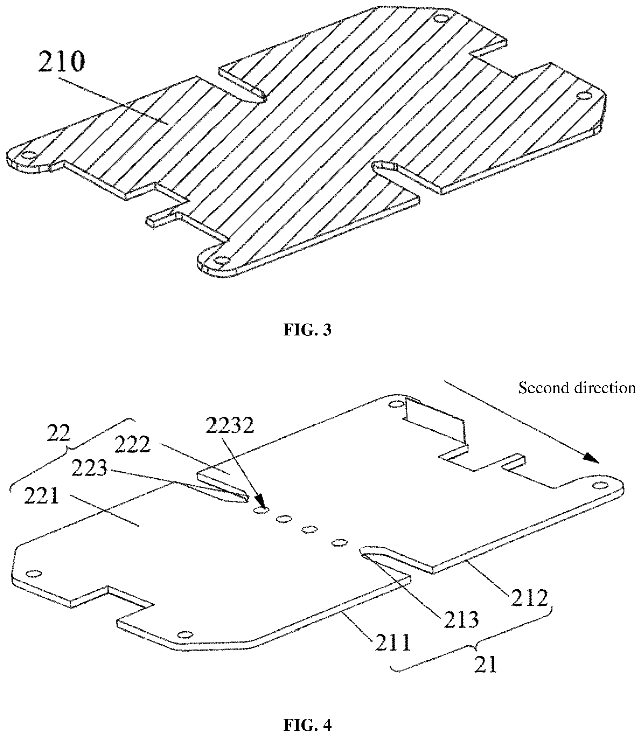

In some embodiments, as shown in FIG. 4, the third member 223 is provided with at least one first hole 2232, and the first hole 2232 penetrates through the third member 223 in the first direction. The first hole 2232 may be formed on the substrate 22 in a machining manner such as drilling, which can reduce the structural strength of the partial region. Accordingly, the third member 223 will be broken when the substrate 22 is squeezed. In some embodiments, a plurality of first holes 2232 may be provided, and the plurality of first holes 2232 are spaced apart in the second direction. When the battery cell assembly 1 expands, the battery cell assembly 1 squeezes the third member 223, and the third member 223 is broken under the action of the battery cell assembly 1. The second direction may be a direction perpendicular to the first direction.

In some embodiments, when the first circuit board 2 is a printed circuit board, a thickness of the printed circuit board may be set to 1.6 mm. A thickness of the first conductive member 21 disposed on the first circuit board 2 is set to 100 µm, and a weak structure may be formed by disposing the first concave portion 2231 on the third member 223. In the second direction, a width range of the third member 223 may be set to 8 mm to 22 mm. Exemplarily, in the second direction, the width of the third member 223 may be set to 10 mm or 20 mm. The first concave portion 2231 may be disposed on a side of the printed circuit board facing towards the battery cell assembly 1, and a depth range of the first concave portion 2231 may be set to 0.9 mm to 1.3 mm. Exemplarily, the depth of the first concave portion 2231 may be set to 1 mm or 1.2 mm.

In some embodiments, the thickness of the printed circuit board is set to 1.6 mm. The thickness of the first conductive member 21 disposed on the printed circuit board is set to 100 µm, and a weak structure may be formed by disposing the first hole 2232 on the third member 223. In the second direction, the width range of the third member 223 may be set to 18 mm to 32 mm. Exemplarily, the width of the third member 223 may be set to 20 mm or 30 mm in the second direction. The first hole 2232 may be disposed on a side of the printed circuit board facing towards the battery cell assembly 1. The first hole 2232 may be a through hole penetrating through the printed circuit board, and a diameter range of the first hole 2232 may be set to 0.8 mm to 1.7 mm. Exemplarily, a diameter of the first hole 2232 may be set to 1 mm or 1.5 mm.

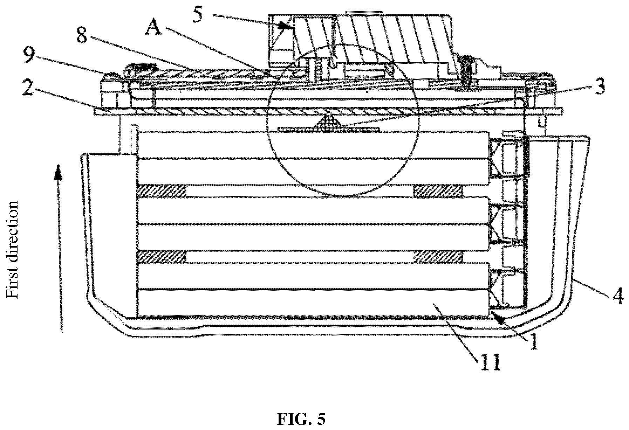

In some embodiments, as shown in FIG. 5, the battery module further includes a fourth member 3. The fourth member 3 is located between the battery cell assembly 1 and the first conductive member 21 in the first direction. The fourth member 3 is configured to disconnect the first conductive member 21 when being squeezed by the battery cell assembly 1.

In some embodiments, the fourth member 3 may be a member configured to cut the first conductive member 21, and is disposed between the battery cell assembly 1 and the first conductive member 21. The fourth member 3 can cut off the first conductive member 21 under the action of the battery cell assembly 1, so as to achieve the disconnection of the first conductive member 21.

In some embodiments, the fourth member 3 is an insulator and further enhances the insulation between the first conductive member 21 and the battery cell assembly 1.

In some embodiments, the fourth member 3 is connected to the battery cell assembly 1. The fourth member 3 is moved along with expansion of the battery cell assembly 1, and the fourth member 3 squeezes the first conductive member 21, so that the first conductive member 21 is disconnected.

In some embodiments, in the first direction, a projection of the fourth member 3 is located within a range of the third member 223. When moving in the first direction under the driving of the battery cell assembly 1, the fourth member 3 can squeeze and act on the third member 223, so that the third member 223 is disconnected, and the first conductive member 21 is disconnected in response to the disconnection of the third member 223.

In some embodiments, the fourth member 3 may be made of a material having a strength greater than that of the third member 223, which facilitates the fourth member 3 to squeeze the third member 223.

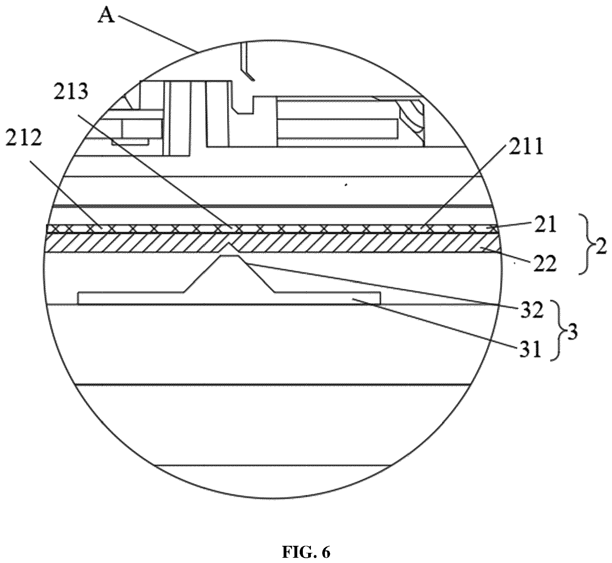

In some embodiments, as shown in FIG. 6, the fourth member 3 includes a main body portion 31 and a protruding portion 32. In the first direction, the protruding portion 32 protrudes from the main body portion 31 and extends toward the first conductive member 21. In the first direction, a projection of the protruding portion 32 overlaps a projection of the first conductive member 21 in the first direction.

In some embodiments, the fourth member 3 may be connected to the battery cell assembly 1 by the main body portion 31. By disposing the protruding portion 32 on the side of the main body portion 31 facing the first conductive member 21 and causing the protruding portion 32 to extend toward the first conductive member 21, the protruding portion 32 can act on the first conductive member 21 when the fourth member 3 is moved.

In some embodiments, in the first direction, the projection of the protrusion 32 overlaps the projection of the first conductive member 21. When the fourth member 3 is moved in the first direction, the protruding portion 32 can act on the first conductive member 21.

Some embodiments of this application further provide a battery pack. The battery pack includes a housing 4 and the battery module provided by the above-described technical solutions, and at least a part of the battery module is located in the housing 4.

The housing 4 may be an assembly configured to form a space for accommodating the components in the battery pack, and the space formed by the housing 4 may be configured to accommodate the battery cell assembly 1, the first circuit board 2, and other components. The housing 4 may be a split structure including a first housing and a second housing connected to each other.

In some embodiments, the first housing and the second housing may be connected to each other in a snap-fit manner, or may be connected to each other in an adhesion manner, or may be connected to each other in a locking manner using a fastener such as a bolt assembly.

In some embodiments, the first circuit board 2 is fixed to the housing 4. For example, the first circuit board 2 may be fixed to the housing 4 by a connection member such as a bolt, a rivet, and a buckle, or may be fixed to the housing 4 by an adhesive substance such as glue and a double-sided tape. By fixedly connecting the first circuit board 2 to the housing 4, movement of the first circuit board 2 along with expansion of the battery cell assembly 1 is restricted, which facilitates disconnection of the first conductive member 21 when being squeezed.

In some embodiments, the battery pack further includes a connector 5. The connector 5 is configured to be connected to an electrical device. The connector 5 may be a wiring member on the battery pack and configured to electrically connect the battery pack to an external device, so that the battery pack outputs electrical energy to the outside and receives electrical energy by the inside. In some embodiments, the connector 5 includes a connection terminal 51 and a base portion 52. The connection terminal 51 is connected onto the base portion 52, and the connection terminal 51 may be a wiring terminal in the connector 5, which enables the battery pack to be quickly plugged into the external device, and improves convenience of connecting the battery pack to the external device. The base portion 52 may be a member connected to the housing 4 or another member in the battery pack. The connection terminal 51 is connected to the base portion 52, so that not only can the base portion 52 protect the connection terminal 51, but also the connection terminal 51 can be firmly connected to the housing 4 or another member in the battery pack..

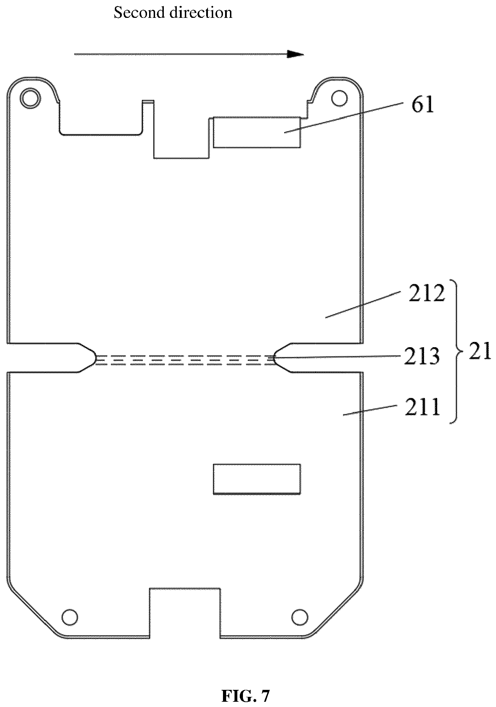

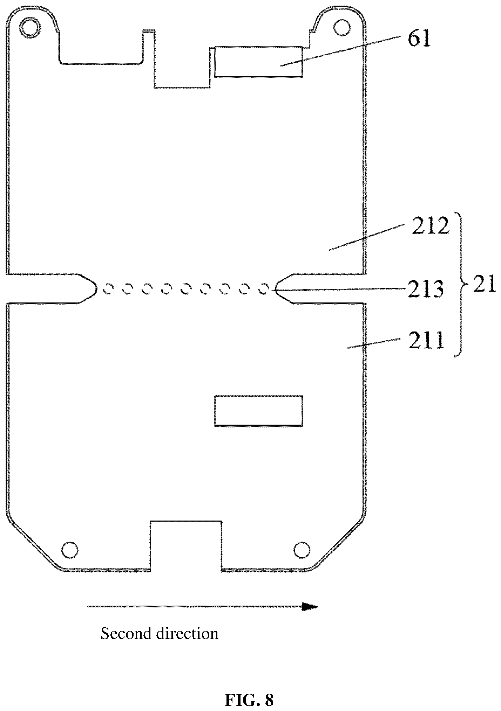

In some embodiments, as shown in FIGs. 7 and 8, the first conductive member 21 includes a first part 211, a second part 212, and a third part 213. The first part 211 and the second part 212 are connected by the third part 213. The first part 211 is connected between the connector 5 and the third part 213. The second part 212 is connected between the battery cell assembly 1 and the third part 213. The third part 213 is configured to be disconnected when being squeezed by the battery cell assembly 1. Accordingly, the first part 211 and the second part 212 are electrically disconnected, and the connector 5 and the battery cell assembly 1 are disconnected.

The first part 211, the second part 212, and the third part 213 all refer to partial structures in the first conductive member 21, and by connecting the first part 211 to the second part 212 by the third part 213, different partial structures in the first conductive member 21 may be connected as a whole.

In some embodiments, the first part 211 is disposed on the first member 221, the second part 212 is disposed on the second member 222, and the third part 213 is disposed on the third member 223, which facilitates the processing and manufacturing of the first circuit board 2.

In some embodiments, the battery pack further includes a connection portion 100. Optionally, the connection portion 100 is connected between a positive terminal of the battery cell assembly 1 and a positive terminal of the connection terminal 51. Optionally, the connection portion 100 is connected between a negative terminal of the battery cell assembly 1 and a negative terminal of the connection terminal 51.

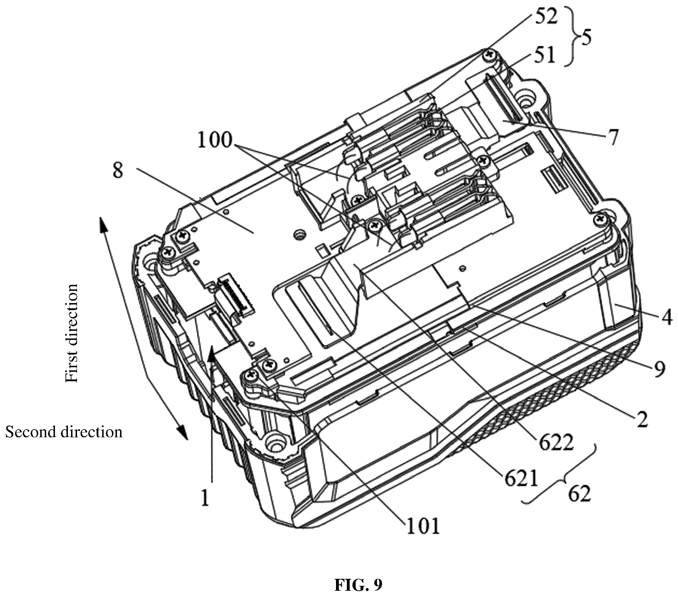

In some embodiments, as shown in FIGs. 8 and 9, the first electrical connection member includes a first segment 61 and a second segment 62 separated from each other. The first segment 61 connects the battery cell assembly 1 and the second part 212. The second segment 62 connects the connector 5 and the first part 211. Optionally, the second segment 62 is welded to the connection terminal 51. Optionally, the second segment 62 and the connection terminal 51 are connected by the connection portion 100.

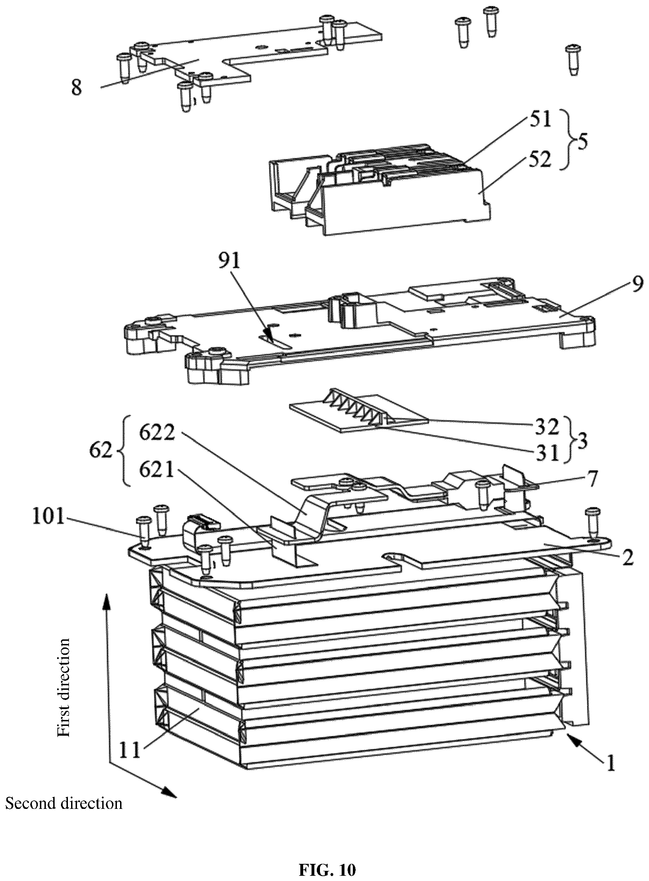

In some embodiments, as shown in FIGs. 9 and 10, the second segment 62 includes a first connection segment 621 and a second connection segment 622 that are separately disposed. The first connection segment 621 and the second connection segment 622 are connected to each other. The first connection segment 621 is connected to the first part 211, and the second connection segment 622 is connected to the connection terminal 51 or the connection portion 100 electrically connected to the connection terminal 51, which facilitates connection between the first part 211 and the connector 5.

In some embodiments, the battery pack further includes a second electrical connection member 7. Optionally, as shown in FIG. 9, the first electrical connection member 6 is connected between the positive terminal of the battery cell assembly 1 and the positive terminal of the connection terminal 51, and the second electrical connection member 7 is connected between the negative terminal of the battery cell assembly 1 and the negative terminal of the connection terminal 51. Optionally, the first electrical connector 6 is connected between the negative terminal of the battery cell assembly 1 and the negative terminal of the connection terminal 51, and the second electrical connector 7 is connected between the positive terminal of the battery cell assembly 1 and the positive terminal of the connection terminal 51.

The battery pack further includes a second circuit board 8 and an insulating bracket 9. In a first direction, the second circuit board 8 and the connector 5 are disposed on a side of the insulating bracket 9 facing away from the battery cell assembly 1, and the first circuit board 2 is disposed on a side of the insulating bracket 9 facing towards the battery cell assembly 1.

The second circuit board 8 is electrically connected to a plurality of battery cells 11 in the battery cell assembly 1. A battery management system (BMS) assembly may be disposed on the second circuit board 8, and the BMS assembly includes a plurality of electronic components. The plurality of electronic components can achieve functions such as data collection, control, protection, communication, electric quantity calculation, signal transmission, and electrical energy transmission for the battery cells 11 in the battery cell assembly 1, and can intelligently manage and maintain the plurality of battery cells 11, which is beneficial to improving the performance and prolonging the service life of the battery pack. In some embodiments, the second circuit board 8 may include a printed circuit board on which a plurality of wires (not shown) connected to electronic components in the BMS assembly are disposed. In some embodiments, the second circuit board 8 may include a flexible circuit board 7, and a plurality of wires disposed in the flexible circuit board 7 are connected to the electronic components in the BMS assembly.

The insulating bracket 9 is fixedly connected to the housing 4 and configured to carry and support other components in the battery pack. The first circuit board 2 is located between the insulating bracket 9 and the battery cell assembly 1. The battery pack includes a fastener 101. The fastener 101 fixedly connects the insulating bracket 9, the first circuit board 2, and the housing 4, thereby further limiting movement of the first circuit board 2 along with expansion of the battery cell assembly 1, and facilitating disconnection of the first circuit board 2 when being squeezed.

In some embodiments, the insulating bracket 9 may be a plastic part, and the insulating bracket 9 is made of plastic, so that the insulating bracket 9 has a certain buffering capability and can buffer external impact. In some embodiments, the insulating bracket 9 may be connected to the housing 4 by a connection member such as a connecting bolt, and a rivet, so that the insulating bracket 9 is conveniently connected to the housing 4.

In some embodiments, the insulating bracket 9 is provided with an opening 91, and the second segment 62 is connected to the connector 5 after penetrating through the opening 91.

Some embodiments of this application further provide an electrical device, and the electrical device includes a load and the battery pack provided by the above-described technical solutions. The battery pack is configured to supply power to the load. The safety of the electrical device is high because the electrical device includes the battery pack provided by the above-described technical solutions.

Finally, it should be noted that the above some embodiments are merely used to describe the technical solutions of this application, but not to limit the technical solutions; and although this application is described in detail with reference to the foregoing some embodiments, those ordinary skilled in the art should understand that: the technical solutions described in the foregoing some embodiments may still be modified, or some or all of the technical features may be equivalently replaced; and these modifications or substitutions do not make the essence of the corresponding technical solutions depart from the scope of the technical solutions of some embodiments of this application, and should be covered by the scope of the claims and the specification of this application. In particular, as long as there is no structural conflict, various technical features mentioned in various some embodiments may be combined in any manner. This application is not limited to the specific some embodiments disclosed herein, but includes all technical solutions falling within the scope of the claims.

## Claims

1. A battery module, comprising:
a battery cell assembly (1), comprising a plurality of battery cells (11), the plurality of battery cells (11) are arranged in a first direction; and
a first circuit board (2), the battery cell assembly (1) and the first circuit board (2) are arranged in the first direction, the first circuit board (2) comprising a first conductive member (21), the first conductive member (21) is disposed on a path of a main circuit of the battery module, and the first conductive member (21) is configured to be disconnected in response to squeezing of the battery cell assembly (1) to turn off the main circuit.

2. The battery module according to claim 1, wherein the first circuit board (2) comprises a substrate (22), and the first conductive member (21) is printed on the substrate (22).

3. The battery module according to claim 2, wherein the substrate (22) comprises a first member (221), a second member (222), and a third member (223), and the first member (221) is connected to the second member by the third member (223); and
the first conductive member (21) covers at least a part of the third member (223), and the third member (223) is configured to be disconnected in response to squeezing of the battery cell assembly (1).

4. The battery module according to claim 3, wherein the third member (223) comprises a first concave portion (2231), and the first concave portion (2231) faces the battery cell assembly (1) in the first direction; and
in the first direction, a thickness of the first concave portion (2231) is less than a thickness of the first member (221), and the thickness of the first concave portion (2231) is less than a thickness of the second member (222).

5. The battery module according to claim 3, wherein the substrate (22) is provided with at least one first hole (2232), and the first hole (2232) penetrates through the third member (223) in the first direction.

6. The battery module according to any one of claims 1 to 5, further comprising a fourth member (3) located between the battery cell assembly (1) and the first conductive member (21), wherein
the fourth member (3) is configured to disconnect the first conductive member (21) when being squeezed by the battery cell assembly (1).

7. The battery module according to claim 6, wherein the fourth member (3) comprises a main body portion (31) and a protruding portion (32);
in the first direction, the protruding portion (32) protrudes from the main body portion (31) and extends toward the first conductive member (21); and
in the first direction, a projection of the protruding portion (32) overlaps a projection of the first conductive member (21).

8. A battery pack, comprising: the battery module according to any one of claims 1 to 7; and a housing (4), at least a part of the battery module being located in the housing (4).

9. The battery pack according to claim 8, wherein the first circuit board (2) is fixed to the housing (4).

10. The battery pack according to claim 8, further comprising a connector (5), the connector (5) is configured to be connected to an electrical device, wherein
the first conductive member (21) comprises a first part (211), a second part (212), and a third part (213), the first part (211) and the second part (212) are connected by the third part (213), the first part (211) is connected between the connector (5) and the third part (213), the second part (212) is connected between the battery cell assembly (1) and the third part (213), and the third part (213) is configured to be disconnected when being squeezed by the battery cell assembly (1).

11. The battery pack according to claim 10, wherein the battery pack further comprises a first electrical connection member (6), the first electrical connection member (6) comprises a first segment (61) and a second segment (62) separated from each other, the first segment (61) connects the battery cell assembly (1) to the second part (212), and the second segment (62) connects the connector (5) to the first part (211).

12. The battery pack according to claim 11, wherein the battery pack further comprises a second circuit board (8) and an insulating bracket (9), the second circuit board (8) and the insulating bracket (9) are disposed in the housing (4); and
in the first direction, the second circuit board (8) and the connector (5) are disposed on a side of the insulating bracket (9) facing away from the battery cell assembly (1), and the first circuit board (2) is disposed on a side of the insulating bracket (9) facing towards the battery cell assembly (1).

13. The battery pack according to claim 12, wherein the insulating bracket (9) is provided with an opening (91), and the second segment (62) is connected to the connector (5) after penetrating through the opening (91).

14. The battery pack according to claim 12 or 13, wherein, the first circuit board (2) is located between the insulating bracket (9) and the battery cell assembly (1);
the battery pack includes a fastener (101), the fastener (101) fixedly connects the insulating bracket (9), the first circuit board (2) and the housing (4).

15. An electrical device, comprising: a load; and the battery pack according to any one of claims 8 to 14, wherein
the battery pack supplies electric power to the load.
